# EUROPÄISCHE PATENTSCHRIFT

(11) **EP 3 247 588 B1**
(45) Veröffentlichungstag und Bekanntmachung des Hinweises auf die Patenterteilung: **25.09.2019**
(21) Anmeldenummer: 16700255.9
(22) Anmeldetag: 08.01.2016
(51) Int. Cl.: B60P 7/08, B60P 7/14

(54) **VORRICHTUNG ZUR SICHERUNG VON LADUNG AUF EINER LADEFLÄCHE**
DEVICE FOR SECURING A LOAD ON A LOADING AREA
DISPOSITIF POUR SÉCURISER UN CHARGEMENT SUR UNE SUFACE DE CHARGEMENT

(30) Priorität: 22.01.2015 DE 202015100289 U
(43) Veröffentlichungstag der Anmeldung: 29.11.2017
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Nunnenkamp, Jörg
(86) Internationale Anmeldenummer: PCT/EP2016/050306
(87) Internationale Veröffentlichungsnummer: WO 2016/116305

(56) Entgegenhaltungen:
- WO-A1-2009/053392
- DE-U1-202008 012 054
- DE-U1-202012 101 216
- GB-A- 2 338 472
- US-A1- 2006 273 615
- US-A1- 2014 099 172

## Beschreibung

Die Erfindung betrifft eine Vorrichtung zur Sicherung von Ladung auf einer Ladefläche, mit zumindest einem flächigen Sicherungsmittel, welches aus sich kreuzenden Kunststoffgurten aufgebaut ist, wobei die Kunststoffgurte in jeweiligen Kreuzungspunkten adhäsiv miteinander verbunden sind.

Bei dem flächigen Sicherungsmittel handelt es sich meistens um ein Sicherungsnetz, welches aus den sich kreuzenden Gurten aufgebaut ist. Die Gurte sind üblicherweise als Kunststoffgurte ausgebildet. Damit das Sicherungsnetz seine Sicherungsfunktion ausfüllen kann, sind die Gurte in Kreuzungspunkten miteinander verbunden. Auf diese Weise wird unter anderem verhindert, dass auf der Ladefläche befindliche Ladung umkippt, verrutscht oder sonstwie eine unkontrollierte Bewegung vollführt. Das ist insofern problematisch, als sich hierdurch ein Fahrzeugschwerpunkt verändern kann und es im schlimmsten Fall zu einem Unfall kommt.

Dazu mag die fragliche Vorrichtung beispielsweise quer zur Längserstreckung der Ladefläche zwischen zwei Seitenwänden eines Laderaums gespannt sein. Das kann in Befestigungspunkten an den Seitenwänden durch Einhängen oder sonstwie erfolgen.

Im Stand der Technik nach der DE 20 2008 016 326 U1 wird eine Vorrichtung beschrieben, bei welcher äußere Quergurte über gegenüberliegende Netzränder hinaus verlängert sind. Dadurch soll eine Sicherung von unterschiedlichen Ladegütern auf einfache Weise ermöglicht werden, und zwar insbesondere bei Transportfahrzeugen ohne feste Seitenwände. Die Verbindung der Gurte im Kreuzungspunkt erfolgt derart, dass die Gurte miteinander vernäht sind. Auch ein Verschlaufen der Gurte wird angesprochen.

Daneben kennt der Stand der Technik eine Verbindung der Gurte derart, dass die Gurtbänder im jeweiligen Kreuzungspunkt durch ineinandergreifende sowie jeweils gurteigene Kunststofffäden miteinander gekoppelt werden. Auf diese Weise wird im Kreuzungspunkt eine Maschenbindung und insbesondere Wirkverbindung realisiert, wie dies die WO 2013/164450 A1 der Anmelderin im Detail beschreibt.

Die bekannten Vorgehensweisen zur Verbindung der sich kreuzenden Gurte im Kreuzungspunkt haben sich grundsätzlich bewährt. Allerdings ist der herstellungstechnische Aufwand nicht unerheblich. Das gilt insbesondere für den Fall, dass die Gurte in den Kreuzungspunkten vernäht werden, wie dies die DE 20 2008 016 326 U1 beschreibt. Denn ein solcher Nähprozess wird oftmals und nach wie vor manuell realisiert und ist demzufolge mit erhöhten Kosten verbunden.
Beim gattungsbildenden Stand der Technik nach der GB 2 338 472 wird ein Sicherungsnetz für Luftfracht beschrieben. Dieses ist aus einzelnen Kunststoffgurten aufgebaut, die sich aus miteinander verflochtenen Polymerfäden zusammensetzen. Die Kunststoffgurte sind jeweils in Kreuzungspunkten miteinander gekoppelt, wobei unter anderem auch eine Schweißverbindung in den Kreuzungspunkten angesprochen wird.

Bei einem vergleichbaren Stand der Technik nach der US 2014/0099172 A1 ist ein Sicherungsnetz realisiert, bei dem die einzelnen Kreuzungspunkte durch eine Verschweißung mit Hochfrequenz-Radiowellen definiert werden. Auch andere Verbindungsmethoden werden in diesem Kontext angesprochen.

Der Erfindung liegt das technische Problem zugrunde, eine derartige Vorrichtung zur Sicherung von Ladung auf einer Ladefläche so weiter zu entwickeln, dass die Produktionskosten insgesamt verringert sind und dennoch die gewünschten Eigenschaften, insbesondere hinsichtlich der Festigkeit, erhalten bleiben.

Zur Lösung dieser technischen Problemstellung ist eine gattungsgemäße Vorrichtung zur Sicherung von Ladung auf einer Ladefläche im Rahmen der Erfindung dadurch gekennzeichnet, dass die Kunststoffgurte miteinander mittels einer Sonotrode im jeweiligen Kreuzungspunkt ultraschallverschweißt sind und zu diesem Zweck die Sonotrode als Stempel oder stempelartig jeweils von einer Seite oder von beiden Seiten an die zu verbindenden Kunststoffgurte im Kreuzungspunkt angelegt wird und mit ihrem direkten Kontakt dafür sorgt, dass der Kunststoffgurt durch die eingeleiteten Ultraschallschwingungen im Bereich des Kreuzungspunktes zum Schmelzen gebracht wird.

Die Kunststoffgurte werden folglich erfindungsgemäß durch Adhäsion im jeweiligen Kreuzungspunkt miteinander gekoppelt. Dabei kann selbstverständlich und grundsätzlich so vorgegangen werden, dass die Kunststoffgurte in sämtlichen Kreuzungspunkten des realisierten Sicherungsnetzes miteinander adhäsiv verbunden werden. Daneben ist es selbstverständlich auch möglich und liegt im Rahmen der Erfindung, wenn die Kunststoffgurte nur in einzelnen ausgewählten Kreuzungspunkten miteinander verbunden sind und darüber hinaus Kreuzungspunkte existieren, die nicht über eine Verbindung der Kunststoffgurte untereinander verfügen.

Erfindungsgemäß kommt es zu einer gewünschten und praktisch intrinsischen Verbindung der Kunststoffgurte untereinander im Zuge der beschriebenen Ultraschallverschweißung. Ergänzend kann extern ein Adhäsivmittel zugeführt werden. Bei dem extern zugeführten Adhäsivmittel wird man meistens so vorgehen, dass das Adhäsivmittel als Klebstoff dem Kreuzungspunkt zugeführt wird und hier für die Kopplung der Kunststoffgurte untereinander sorgt. Bei dem intrinsisch vorhandenen Adhäsivmittel handelt es sich demgegenüber um ein Adhäsivmittel, welches dem Gurtmaterial entstammt.

In diesem Zusammenhang ist es denkbar, dass das intrinsische Adhäsivmittel von einer Beschichtung des Gurtbandes stammt bzw. zur Verfügung gestellt wird. Genauso gut liegt es im Rahmen der Erfindung, wenn das Gurtband selbst das Adhäsivmittel zur Verfügung stellt. So wird man meistens vorgehen.Stammt das Adhäsivmittel von den Kunststoffgurten selbst, so sind die Kunststoffgurte erfindungsgemäß im jeweiligen Kreuzungspunkt miteinander verschweißt. Das setzt regelmäßig voraus, dass die Kunststoffgurte zumindest mit einer äußeren Kunststoffbeschichtung (im Kreuzungspunkt) ausgerüstet sind, welche durch den Schweißvorgang schmilzt und für die gewünschte adhäsive Kopplung sorgt. Selbstverständlich können die zuvor beschriebenen grundsätzlichen Methoden zur Verbindung der Kunststoffgurte im jeweiligen Kreuzungspunkt auch miteinander kombiniert werden.

Falls die Kunststoffgurte zusätzlich miteinander verklebt werden, kommt typischerweise ein organischer Klebstoff zum Einsatz. Dieser weist regelmäßig eine synthetische Basis aus Kohlenwasserstoffverbindungen auf.

Bewährt haben sich beispielsweise physikalisch abbindende Schmelzklebstoffe. Solche Schmelzklebstoffe sind bei Raumtemperatur fest und werden durch Aufschmelzen verarbeitbar. Die heiße Klebstoffschmelze wird erfindungsgemäß zwischen die beiden zu verbindenden Gurte gebracht und die beiden Gurte werden im Kreuzungspunkt miteinander gefügt. Unmittelbar nach dem Abkühlen und Erstarren des physikalisch abbindenden Schmelzklebstoffes ist die Verbindung im Kreuzungspunkt fest und funktionsfähig. Dadurch lassen sich kurze Taktzeiten erreichen und kann das solchermaßen realisierte Sicherungsnetz unmittelbar weiter verarbeitet werden.

Alternativ hierzu kann es sich bei dem Klebstoff auch um einen chemisch härtenden Polymerisationsklebstoff handeln. In diesem Fall werden einzelne chemische Bestandteile für den Klebstoff im richtigen Verhältnis in eine Klebefuge zwischen den beiden im Kreuzungspunkt zu verbindenden Gurten eingebracht. Die Verfestigung erfolgt dann durch eine chemische Reaktion der Bestandteile miteinander. Dabei haben sich insbesondere Polyadditionsklebstoffe und vorzugsweise Epoxid-Harzklebstoffe als besonders günstig erwiesen. Solche Polyadditionsklebstoffe zeichnen sich dadurch aus, dass in ihnen eine sogenannte Polyreaktion stattfindet, welche über einzelne voneinander unabhängige Additionsreaktionen Polymere beziehungsweise Kunststoffe bildet.

Insbesondere Epoxidharz-Klebstoffe werden bereits im großen Stil im Automobilbau eingesetzt und sind dementsprechend besonders kostengünstig zu realisieren. Außerdem zeichnen sich Epoxidharz-Klebstoffe bei kleinen Spaltmaßen durch hohe Festigkeiten aus, wobei solche Spaltmaße im Bereich von 0,3 mm bis 0,5 mm erfindungsgemäß typischerweise im Bereich der Kreuzungspunkte beobachtet werden, wo die Kunststoffgurte miteinander im Beispielfall die Verklebung erfahren.

Tatsächlich ersetzen Epoxidharz-Klebstoffe im Automobilbau zunehmend Punktschweißungen, sind also für größerflächige Verklebungen besonders geeignet. Außerdem verfügen sie über eine hohe Steifigkeit und Ermüdungsfestigkeit. Im Allgemeinen werden Epoxid-Harzklebstoffe durch Wärmezufuhr ausgehärtet. Dabei kann typischerweise mit relativ moderaten Temperaturen im Bereich von 100 °C bis 140 °C gearbeitet werden, sodass insgesamt eine Schädigung der Kunststoffgurte nicht zu erwarten ist.

Für den Fall, dass die Kunststoffgurte im jeweiligen Kreuzungspunkt zusätzlich miteinander verklebt werden, kann ferner so vorgegangen werden, dass der jeweilige Klebstoff bzw. allgemein das erforderliche Adhäsivmittel zur Kopplung der Kunststoffgurte in den Kreuzungspunkt eingepresst wird oder eingepresst werden kann. Das gilt sowohl für den Fall, dass der Klebstoff als extern zugeführtes Adhäsivmittel zur Verfügung gestellt wird als auch für den Fall, dass das Adhäsivmittel von den Gurten selbst stammt und beispielsweise als zuvor zum Schmelzen gebrachte Beschichtung ausgebildet ist. Durch das Einpressen des fraglichen Klebstoffes bzw. Adhäsivmittels in den Kreuzungspunkt wird im Kreuzungspunkt eine besonders innige Verbindung der jeweiligen Gurte erreicht. Das Einpressen des Adhäsivmittels kann bei einem extern zugeführten Adhäsivmittel so erfolgen, dass das Adhäsivmittel beispielsweise als Hotmelt oder Schmelzklebstoff aus einer Düse unter Druck dem Kreuzungspunkt zugeführt wird.

Kommt ein intrinsisches Adhäsivmittel zum Einsatz, welches von einer Beschichtung des Gurtbandes stammt bzw. zur Verfügung gestellt wird, so lässt sich dieses intrinsische Adhäsivmittel beispielsweise dadurch in den jeweiligen Kreuzungspunkt einpressen, dass die fragliche Beschichtung zunächst geschmolzen und dann beispielsweise mit einem Medium, beispielsweise Druckluft, druckbeaufschlagt wird. Ähnlich kann auch bei externen zugeführten Adhäsivmitteln gearbeitet werden.

Nach besonders bevorzugter Ausführungsform handelt es sich bei den Kunststoffgurten um solche aus insbesondere gewebten Polyesterfäden. Derartige Kunststoffgurte verfügen über eine außerordentliche Festigkeit und sind deshalb für die Ladungssicherung prädestiniert. Hinzu kommt, dass das aus den Kunststoffgurten gebildete Sicherungsnetz flexibel an das Ladegut angepasst werden kann.

In diesem Zusammenhang hat es sich im Rahmen der Erfindung bewährt, dass die fraglichen Kunststoffgurte miteinander ultraschallverschweißt sind. Die Ultraschallschweißung wird mithilfe der Sonotrode vorgenommen. Bei Sonotroden handelt es sich um Werkzeuge, mit deren Hilfe hochfrequente mechanische Schwingungen (Ultraschall) eingeleitet werden. Die Sonotrode stellt folglich eine Verbindung vom Ultraschallgenerator zum Werkstoff bzw. hier den Kunststoffgurten her. Mithilfe der Sonotroden wird beim Ultraschallschweißen der Kunststoffgurte im Kreuzungspunkt eine dauerhafte Verbindung der Kunststoffgurte erreicht.

Zu diesem Zweck wird die Sonotrode erfindungsgemäß als Stempel oder stempelartig jeweils von einer Seite oder von beiden Seiten an die zu verbindenden Kunststoffgurte im Kreuzungspunkt angelegt werden und sorgt mit ihrem direkten Kontakt dafür, dass der Kunststoffgurt durch die eingeleiteten Ultraschallschwingungen im Bereich des Kreuzungspunktes zum Schmelzen gebracht wird. Dadurch kommt es zu der gewünschten und praktisch intrinsischen Verbindung der Kunststoffgurte untereinander im Zuge des Schweißens und vorzugsweise durch die beschriebene Ultraschallverschweißung.

Bei der Herstellung der einzelnen Verschweißungen im Kreuzungspunkt kann dabei typischerweise so vorgegangen werden, dass mehrere Sonotroden gleichzeitig in mechanischem Kontakt zu den Kreuzungspunkten gebracht werden und hier für die Ultraschallverschweißung der Kunststoffgurte sorgen. Das mag gegenüber einer Anschlagfläche erfolgen. Es kann aber auch so vorgegangen werden, dass mit sich im jeweiligen Kreuzungspunkt gegenüberliegenden Sonotroden gearbeitet wird.

In jedem Fall ermöglicht der Rückgriff auf solche Sonotroden eine flexible Anpassung an die spezifische Auslegung des flächigen Sicherungsmittels bzw. Sicherungsnetzes. Denn je nach Breite der zu verbindendenKunststoffgurte, deren Anordnung zueinander, der gebildeten Maschengröße etc. können die Sonotroden matrixartig angeordnet werden und lässt sich auf diese Weise im Maximum das komplette Sicherungsnetz mit einem einzigen Schweißvorgang herstellen, indem die zu verbindenden Gurte in mehreren jeweiligen Kreuzungspunkten miteinander ultraschallverschweißt werden. Es ist aber auch möglich, dass das Sicherungsnetz über die matrixartige Anordnung der Sonotroden im Beispielfall hin- und herbewegt wird, bis die jeweiligen Kreuzungspunkte wunschgemäß miteinander verbunden sind.

Jedenfalls wird deutlich, dass die beschriebene Ultraschallverschweißung besonders schnell und einfach realisiert werden kann, weil keine zusätzlichen Hilfsmittel erforderlich sind und insbesondere ein externes Adhäsivmittel nicht zugeführt werden muss. Außerdem sind die als Kunststoffgurte ausgebildeten Gurte aufgrund ihrer Materialwahl für die beschriebene Verschweißung und insbesondere Ultraschallverschweißung prädestiniert.

Die Kunststoffgurte liegen üblicherweise als Längsgurte und Quergurte vor. Auf diese Weise schneiden sich die Kunststoffgurte in ihren jeweiligen Kreuzungspunkt im Wesentlichen rechteckförmig. Als Folge hiervon werden auch zwischen den einzelnen Kunststoffgurten rechteckförmige Maschen beobachtet. Grundsätzlich können natürlich auch andere Maschenformen zum Einsatz kommen und realisiert werden. Beispielsweise sind rautenförmige Maschen ebenso denkbar wie trapezförmige oder drachenförmige Maschen. Im Regelfall wird man jedoch mit rechteckförmigen Maschen arbeiten und demzufolge die Längsgurte und Quergurte rechtwinklig in ihren jeweiligen Kreuzungspunkten adhäsiv miteinander verbinden.

Das auf diese Weise realisierte flächige Sicherungsmittel kann mit jedweden denkbaren Anschlagmitteln montiert werden. So ist es möglich, dass das flächige Sicherungsmittel mittels randseitiger Anschlagmittel zwischen wenigstens zwei Befestigungspunkten gespannt ist. Diese Befestigungspunkte können an sich gegenüberliegenden Seitenwänden eines Laderaums vorgesehen werden. Bei den Befestigungspunkten mag es sich um Öffnungen handeln, in welche Anschlaghaken oder allgemein Anschlagadapter lösbar eingehängt werden. Auch die Kombination des solchermaßen realisierten flächigen Sicherungsmittels mit einem oder mehreren Zurrgurten zur Verspannung ist denkbar und wird von der Erfindung umfasst.

Im Ergebnis wird eine Vorrichtung zur Sicherung von Ladung zur Verfügung gestellt, die sich besonders kostengünstig, einfach und flexibel herstellen lässt. Denn die Verbindung der einzelnen Kunststoffgurte in ihren Kreuzungspunkten erfolgt im Gegensatz zum Stand der Technik weder durch Vernähen noch durch gurteigene Kunststofffäden. Vielmehr greift die Erfindung bewusst auf eine Adhäsivverbindung im Kreuzungspunkt zurück. In diesem Kontext hat sich eine Verschweißung der typischerweise als Kunststoffgurte ausgebildeten Gurte in den jeweiligen Kreuzungspunkten als besonders günstig erwiesen. Hierin sind die wesentlichen Vorteile zu sehen.

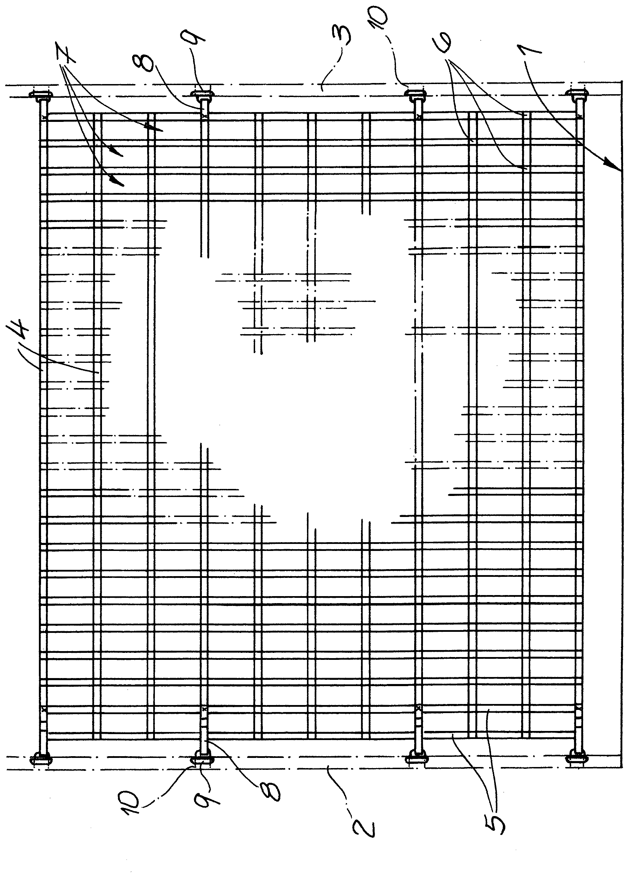

Im Folgenden wird die Erfindung anhand einer lediglich am Ausführungsbeispiel darstellenden Zeichnung näher erläutert. Die einzige Figur zeigt eine erfindungsgemäße Vorrichtung zur Sicherung von Ladung auf einer Ladefläche in schematischer Übersicht.

In der Figur ist eine Vorrichtung zur Sicherung von Ladung auf einer Ladefläche 1 dargestellt. Die Ladefläche 1 gehört zu einem Laderaum 1, 2, 3, welcher neben der Ladefläche bzw. Bodenfläche 1 zusätzlich noch mit zwei Seitenwänden 2, 3 ausgerüstet ist. Außerdem mag der Laderaum 1, 2, 3 noch mit einem Dach bzw. einer Dachfläche versehen sein, die jedoch im Beispielfall nicht dargestellt ist.

Die erfindungsgemäße Vorrichtung ist mit zumindest einem flächigen Sicherungsmittel 4, 5 ausgerüstet, welches aus sich kreuzenden Gurten bzw. Kunststoffgurten 4, 5 aufgebaut ist. Bei den Gurten 4, 5 handelt es sich im Beispielfall um Horizontalgurte 4 und Vertikalgurte 5. Außerdem sind die Gurte 4, 5 in Kreuzungspunkten 6 miteinander verbunden.

Im Beispielfall und nicht einschränkend sind die Gurte 4, 5 in jedem Kreuzungspunkt 6 miteinander gekoppelt. Es kann aber auch so vorgegangen werden, dass eine Verbindung der Gurte 4, 5 nicht in jedem Kreuzungspunkt 6, sondern beispielsweise in jedem zweiten Kreuzungspunkt 6 realisiert wird. Das ist jedoch nicht dargestellt, gleichwohl im Rahmen der Erfindung möglich und vom Schutzbereich umfasst.

Von besonderer Bedeutung für die Erfindung ist nun die Tatsache, dass die Gurte 4, 5 im jeweiligen Kreuzungspunkt 6 adhäsiv miteinander verbunden sind. Im Rahmen des Ausführungsbeispiels wird die adhäsive Verbindung der Gurte 4, 5 derart realisiert, dass die beiden Gurte 4, 5 im Kreuzungspunkt 6 miteinander verschweißt sind. Alternativ oder zusätzlich können die beiden Gurte 4, 5 aber auch im Kreuzungspunkt 6 miteinander verklebt werden. Bei den Gurten 4, 5 handelt es sich um Kunststoffgurte, die aus insbesondere gewebten Polyesterfäden ausgebildet sind. Als Schweißung empfiehlt die Erfindung eine Ultraschallschweißung mithilfe von Sonotroden, wie dies einleitend bereits beschrieben wurde.

Auf diese Weise werden die Gurte 4, 5 im jeweiligen Kreuzungspunkt 6 zumindest teilweise an ihrer jeweils aneinander liegenden Oberfläche durch die mithilfe der jeweiligen Sonotrode eingebrachten Ultraschallschwingungen so erwärmt bzw. erhitzt, dass der Kunststoff (im Beispielfall Polyester) seine Erweichungstemperatur überschreitet. Tatsächlich liegt die Erweichungstemperatur von Polyester bei in etwa 130 °C.

Sobald der betreffende Gurt respektive Kunststoffgurt 4, 5 im Kreuzungspunkt 6 zumindest an seiner Oberfläche seine Erweichungstemperatur überschritten hat und wenigstens teilweise angeschmolzen wurde, werden die eine oder die beiden sich gegenüberliegenden Sonotroden entfernt, sodass als Folge hiervon die beiden Gurte 4, 5 im Kreuzungspunkt 6 dauerhaft miteinander verbunden sind. Dieser Vorgang lässt sich typischerweise in Bruchteilen einer Sekunde umsetzen, sodass die erfindungsgemäße Verbindungsmethode mit deutlichen Kostenvorteilen gegenüber beispielsweise einem Vernähen in diesem Bereich ausgerüstet ist. Außerdem entfällt bei dem beschriebenen Schweißen bzw. Ultraschallschweißen die Zufuhr von externem Material, im Stand der Technik des Nähfadens. Dadurch ist die Handhabung vereinfacht und lässt sich die Produktionsgeschwindigkeit deutlich steigern.

Bei der alternativen Methode zur Verbindung der beiden Gurte 4, 5 im jeweiligen Kreuzungspunkt 6 durch verkleben wird typischerweise so vorgegangen, dass ein externes Adhäsivmittel zugeführt wird. Hierbei kann es sich um einen Schmelzkleber handeln, der mit Hilfe einer Schmelzdüse dem jeweiligen Kreuzungspunkt 6 zugeführt wird. Das kann unter Druck geschehen. Dadurch gewährleistet die Erfindung, dass das extern zugeführte Adhäsivmittel bzw. der Klebstoff respektive der Schmelzklebstoff in dem betreffenden Kreuzungspunkt 6 eingepresst wird. Zu diesem Zweck mag die Schmelzdüse für den Schmelzkleber im Beispielfall an die Form und flächenmäßige Ausdehnung des Kreuzungspunktes 6 angepasst sein. Beispielsweise kann die Schmelzdüse rund oder auch quadratisch bzw. rechteckig ausgelegt werden, so dass beim Austritt des Schmelzklebstoffes aus der Schmelzdüse der gesamte Bereich des Kreuzungspunktes 6 von dem Schmelzklebstoff erreicht wird. Auf diese Weise werden die gleichen Vorteile wie zuvor beschrieben erreicht. D. h., die Gurte 4, 5 lassen sich im Kreuzungspunkt 6 dauerhaft und in Bruchteilen von Sekunden miteinander verbinden.

Man erkennt, dass sich die Gurte 4, 5 bzw. die Horizontalgurte 4 und Vertikalgurte 5 im jeweiligen Kreuzungspunkt 6 im Wesentlichen rechteckförmig schneiden. Auf diese Weise werden von den Gurten 4, 5 umschlossene rechteckförmige Maschen 7 gebildet, die im Ausführungsbeispiel gleich groß ausgelegt sind. Selbstverständlich kann aufgrund der flexiblen Fertigung auch mit unterschiedlichen Größen der einzelnen Maschen 7 über das Sicherungsnetz 4, 5 gearbeitet werden. Das ist jedoch nicht dargestellt.

Um das flächige Sicherungsmittel 4, 5 im Laderaum bzw. Transportraum 1, 2, 3 anbringen zu können, verfügt das flächige Sicherungsmittel 4, 5 bzw. das Sicherungsnetz 4, 5 aus den sich kreuzenden Gurten 4, 5 über randseitige Anschlagmittel 8, 9. Die Anschlagmittel 8, 9 setzen sich erfindungsgemäß aus einem Gurt bzw. einer Gurtschlaufe 8 einerseits und einem in die Gurtschlaufe 8 eingeschlauften Haken bzw. Adapter 9 andererseits zusammen. Bei dem Haken respektive Adapter 9 mag es sich um einen Kunststoffadapter handeln. Jedenfalls kann das flächige Sicherungsmittel 4, 5 mithilfe der beschriebenen randseitigen Anschlagmittel 8, 9 zwischen zwei Befestigungspunkten 10 gespannt werden, die im Ausführungsbeispiel als jeweils Öffnungen 10 in den sich gegenüberliegenden Seitenwänden 2, 3 ausgebildet sind.

Tatsächlich verfügen die Seitenwände 2, 3 im Beispielfall über eine Rasterung aus den Löchern 10 oder sind mit entsprechenden Schienen mit Löchern 10 ausgerüstet, so dass die Haken bzw. Adapter 9 in die betreffenden Löcher 10 lösbar eingreifen können. Darüber hinaus mögen noch ein oder mehrere Zurrgurte realisiert sein, mit deren Hilfe das flächige Sicherungsmittel 4, 5 zwischen den Seitenwänden 2, 3 im Beispielfall gespannt wird. Dabei wird nicht einschränkend so vorgegangen, dass die Ladefläche 1 in ihrer Längserstreckung mithilfe des flächigen Sicherungsmittels 4, 5 in einzelne Abteilungen quergeteilt wird.

Grundsätzlich kann die beschriebene Vorrichtung zur Sicherung von Ladung aber auch ganz oder teilweise als Bordwandersatz eingesetzt werden, wie dies im Rahmen des Standes der Technik nach der WO 2013/164450 A1 bereits beschrieben worden ist. In diesem Fall sind die Befestigungspunkte 10 typischerweise an seitlich der Ladefläche 1 angebrachten und sich meistens vertikal demgegenüber erstreckenden Rungen realisiert, in welche die Haken 9 lösbar eingehängt werden, um das flächige Sicherungsmittel 4, 5 insgesamt zwischen den Rungen im Rahmen der nichtdargestellten Variante zu spannen.

## Patentansprüche

1. Vorrichtung zur Sicherung von Ladung auf einer Ladefläche (1), mit zumindest einem flächigen Sicherungsmittel (4, 5), welches aus sich kreuzenden Kunststoffgurten (4, 5) aufgebaut ist, wobei die Kunststoffgurte (4, 5) in jeweiligen Kreuzungspunkten (6) adhäsiv miteinander verbunden sind,
**dadurch gekennzeichnet, dass**
die Kunststoffgurte (4, 5) miteinander mittels einer Sonotrode im jeweiligen Kreuzungspunkt (6) ultraschallverschweißt sind und
- zu diesem Zweck die Sonotrode als Stempel oder stempelartig jeweils von einer Seite oder von beiden Seiten an die zu verbindenden Kunststoffgurte (4, 5) im Kreuzungspunkt (6) angelegt wird und mit ihrem direkten Kontakt dafür sorgt, dass der Kunststoffgurt (4, 5) durch die eingeleiteten Ultraschallschwingungen im Bereich des Kreuzungspunktes (6) zum Schmelzen gebracht wird.

2. Vorrichtung nach Anspruch 1, **dadurch gekennzeichnet, dass** die Kunststoffgurte (4, 5) im jeweiligen Kreuzungspunkt (6) zusätzlich miteinander verklebt sind.

3. Vorrichtung nach Anspruch 2, **dadurch gekennzeichnet, dass** zur Verklebung der Kunststoffgurte (4, 5) ein organischer Klebstoff eingesetzt wird.

4. Vorrichtung nach Anspruch 3, **dadurch gekennzeichnet, dass** als Klebstoff ein physikalisch abbindender Schmelzklebstoff Verwendung findet.

5. Vorrichtung nach Anspruch 3 oder 4, **dadurch gekennzeichnet, dass** der Klebstoff als chemisch härtender Polymerisationsklebstoff, insbesondere Polyadditionsklebstoff, vorzugsweise Epoxidharz-Klebstoff ausgebildet ist.

6. Vorrichtung nach einem der Ansprüche 1 bis 5, **dadurch gekennzeichnet, dass** die Kunststoffgurte (4, 5) aus gewebten Polyesterfäden ausgebildet sind.

7. Vorrichtung nach einem der Ansprüche 1 bis 6, **dadurch gekennzeichnet, dass** die Kunststoffgurte (4, 5) als Horizontalgurt (4) und Vertikalgurt (5) ausgebildet sind, die sich in ihrem jeweiligen Kreuzungspunkt (6) im Wesentlichen rechteckförmig schneiden.

8. Vorrichtung nach einem der Ansprüche 1 bis 7, **dadurch gekennzeichnet, dass** das flächige Sicherungsmittel (4, 5) mittels randseitiger Anschlagmittel (8, 9) zwischen wenigstens zwei Befestigungspunkten (10) gespannt ist.

## Claims

1. Device for securing loads on a loading area (1) with at last one planar securing means (4, 5) which is built up of plastic belts (4, 5) crossing each other, wherein at the respective crossing points (6) the plastic belts (4, 5) are adhesively connected to each other,
**characterised in that**
the plastic belts (4, 5) are ultrasonically welded to each other at the respective crossing point (6) by means of a sonotrode and
- for this purpose the sonotrode is applied as a stamp or in a stamp-like manner in each case from one side or from both sides to the plastic belt (4, 5) at the crossing point (6) and with its direct contact ensures that through the introduce ultrasonic vibrations the plastic belt (4, 5) is caused to melt in the area of the crossing point (6) .

2. Device according to claim 1 **characterised in that** the plastic belts (4, 5) are also adhered to each other at the respective crossing point (6).

3. Device according to claim 2 **characterised in that** to adhere the plastic belts (4, 5) an organic adhesive is used.

4. Device according to claim 3 **characterised in that** a physically binding melt adhesive is used.

5. Device according to claim 3 or 4 **characterised in that** the adhesive is a chemically hardening polymerisation adhesive, in particularly a polyaddition adhesive, preferably epoxy resin adhesive.

6. Device according to any one of claims 1 to 5 **characterised in that** the plastic belts (4, 5) are made of woven polyester threads.

7. Device according to any one of claims 1 to 6 **characterised in that** the plastic belts (4, 5) are designed as a horizontal belt (4) and vertical belt (5) which at their respective crossing point (6) essentially intersect at right angles.

8. Device according to any one of claims 1 to 7 **characterised in that** the planar securing means (4, 5) is tensioned by means of lifting tackle (8, 9) between at least two fastening points (10).

## Revendications

1. Dispositif, destiné à sécuriser un chargement sur une surface de chargement (1), pourvu d'au moins un moyen de sécurisation (4, 5) plan, lequel est composé de deux sangles en matière plastique (4, 5) qui se croisent, les sangles en matière plastique (4, 5) étant assemblées l'une à l'autre par moyen adhésif dans des points de croisement (6) respectifs,
**caractérisé en ce que** les sangles en matière plastique (4, 5) sont soudées l'une à l'autre aux ultrasons au point de croisement (6) respectif, au moyen d'une sonotrode, et
- à cette fin, la sonotrode étant posée comme poinçon ou à la manière d'un poinçon chaque fois à partir d'un côté ou des deux côtés sur les sangles en matière plastique (4, 5), au point de croisement (6) sur les sangles en matière plastique (4, 5) qui doivent être assemblées et assurant par son contact direct que la sangle en matière plastique (4, 5) soit amenée en fonction dans la zone du point de croisement (6) par les vibrations ultrasoniques introduites.

2. Dispositif selon la revendication 1, **caractérisé en ce qu'**additionnellement, les sangles en matière plastique (4, 5) sont collées l'une à l'autre au point de croisement (6) respectif.

3. Dispositif selon la revendication 2, **caractérisé en ce que** pour le collage des sangles en matière plastique (4, 5), on met en oeuvre un agent adhésif organique.

4. Dispositif selon la revendication 3, **caractérisé en ce qu'**il est utilisé en tant qu'agent adhésif une colle thermofusible à prise physique.

5. Dispositif selon la revendication 3 ou 4, **caractérisé en ce que** l'agent adhésif est conçu en tant que colle de polymérisation à durcissement chimique, notamment en tant qu'agent adhésif à polyaddition, de préférence en tant qu'agent adhésif époxy.

6. Dispositif selon l'une quelconque des revendications 1 à 5, **caractérisé en ce que** les sangles en matière plastique (4, 5) sont conçues en fils de polyester tissés.

7. Dispositif selon l'une quelconque des revendications 1 à 6, **caractérisé en ce que** les sangles en matière plastique (4, 5) sont conçues sous la forme d'une sangle horizontale (4) et d'une sangle verticale (5) qui se recoupent sensiblement en forme de carré sur leur point de croisement (6).

8. Dispositif selon l'une quelconque des revendications 1 à 7, **caractérisé en ce que** le moyen de sécurisation (4, 5) plan est tendu à l'aide de moyens d'arrêt (8, 9) du côté bord entre au moins deux points de fixation (10) .
